Europäisches Patentamt

European Patent Office

Office européen des brevets

(19)

(11) Veröffentlichungsnummer: **0 360 173**
**A2**

(12) **EUROPÄISCHE PATENTANMELDUNG**

(21) Anmeldenummer: **89117158.9**

(22) Anmeldetag: **16.09.89**

(51) Int. Cl.⁵: **G01M 1/30**

(30) Priorität: **22.09.88 DE 3832236**

(43) Veröffentlichungstag der Anmeldung:
**28.03.90 Patentblatt 90/13**

(84) Benannte Vertragsstaaten:
**AT BE CH DE ES FR GB GR IT LI LU NL SE**

(71) Anmelder: **BASF Aktiengesellschaft**
**Carl-Bosch-Strasse 38**
**D-6700 Ludwigshafen(DE)**

(72) Erfinder: **Zimmermann, Clifton, Dr.**
**Ludwig-Wilhelm-Strasse 2**
**D-7500 Karlsruhe 1(DE)**
Erfinder: **Holl, Norbert**
**Waldstrasse 1**
**D-6719 Battenberg(DE)**
Erfinder: **Lewin, Helmut**
**Wormser Landstrasse 30**
**D-6712 Bobenheim-Roxheim(DE)**
Erfinder: **Wippel, Juergen**
**Augrund 64**
**D-6920 Sinsheim(DE)**

(54) **Anordnung zur dynamischen Kompensation von Rundlaufschwankungen bei Rotationskörpern.**

(57) Eine den Umlauf des Rotationskörpers (1) abtastende Meßeinrichtung (9) ist mit dem Ist-Wert-Eingang eines Reglers (12) verbunden, dessen Ausgangssignal auf ein Stellglied (7,8) geschaltet ist, welches auf ein senkrecht zur Achse verstellbares Lager (4) einwirkt.

EP 0 360 173 A2

## Anordnung zur dynamischen Kompensation von Rundlaufschwankungen bei Rotationskörpern

Die Erfindung betrifft eine Anordnung zur dynamischen Kompensation von Rundlaufschwankungen bei Rotationskörpern.

Die Formgenauigkeit von zylindrischen oder kugelsymmetrischen Körpern ist begrenzt durch den Stand der Fertigungstechnik. Auf modernen Präzisionsmaschinen können auch für Walzen mit größerem Durchmesser, d.h. Durchmesser oberhalb 10 cm, Genauigkeiten bis 2 μm erreicht werden. Gewöhnlich liegt die Formabweichung von der idealen Kreisform jedoch deutlich höher. Ungenauigkeiten der Lager für rotierbare Körper addieren sich zu den Formabweichungen im technischen Betrieb hinzu. In der Praxis muß man bei sich drehenden Wellen mit Unrundheiten bis zu 10 μm rechnen. Für Präzisionsbearbeitungsmaschinen sind Unrundheiten in dieser Größe zu hoch. Dementsprechend war die Aufgabe zu lösen, aus Form- und Lagerabweichungen resultierende Rundlaufschwankungen bei Rotationskörpern im Betrieb weitgehend zu kompensieren.

Die Lösung der Aufgabe besteht in einer regelungstechnischen Anordnung, die aus einer den Umlauf des Rotationskörpers abtastenden Meßeinrichtung, einem mit dem Ist-Wert-Eingang daran angeschlossenen Regler und einem von diesem angesteuerten Stellglied besteht, das auf ein verstellbares Lager des Rotationskörpers einwirkt.

Ein Ausführungsbeispiel der erfindungsgemäßen Anordnung ist anhand einer schematischen Zeichnung nachfolgend beschrieben.

Es zeigen

Figur 1 die erfindungsgemäße Anordnung in einem Gesamtschema

Figur 2 eine elektromechanisch verstellbare Walzenlagerung

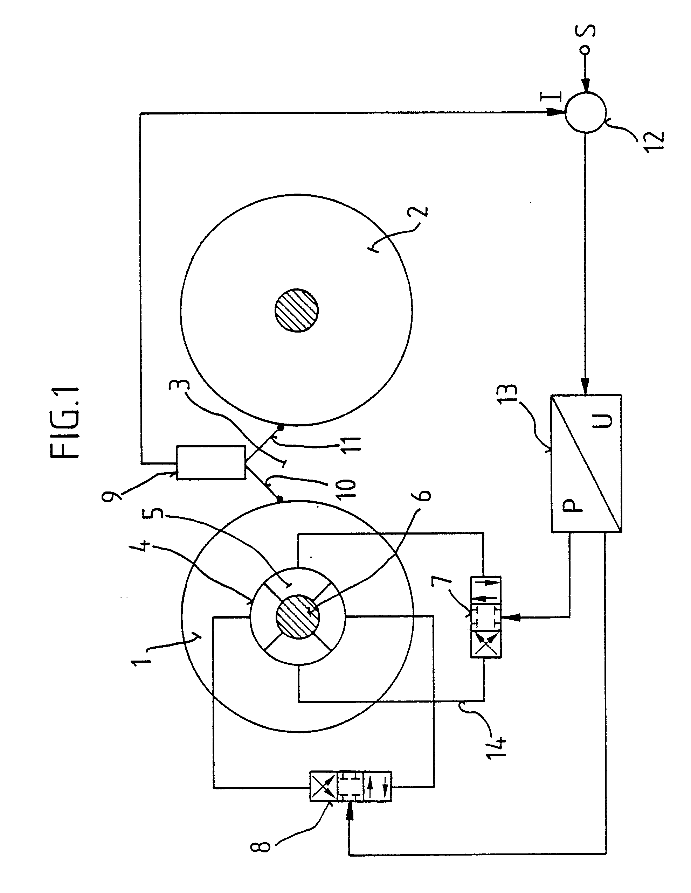

Ein durch zwei Walzen 1 und 2 (Figur 1) gebildeter Spalt 3 soll in der durch Form- und Lagerabweichungen der Walzen beeinflußten Spaltbreite konstant gehalten werden. Hierzu ist eine der beiden Walzen an beiden Enden jeweils in einem hydraulischen Lager 4 senkrecht zu Lagerachse verschiebbar gehalten. Das Lager besteht aus in vier Quadranten angeordneten und mit einem Druckmedium, beispielsweise Öl, gefüllten Kammern 5, die vom Wellenzapfen 6 mit einem Abstand von den Kammerwänden zwischen 20 und 100 μm abgeschlossen werden und über ansteuerbare, sehr schnell ansprechende Servoventile 7 und 8 mit Druckquellen verbunden sind. Die andere Walze 2 in Wälz- oder Kugellagern gehalten.

Die Kompensation der Form- und Lagerabweichungen der beiden Walzen erfolgt durch die meßtechnische Erfassung der Abweichungen und das darauf folgende Regeln der Wellenlage der Walze 1 im quasi gleichen Moment. Die Regelfrequenz kann bis zu 10 kHz betragen.

Die Meßeinrichtung zur äußerst genauen Bestimmung der Lage der Walzenoberflächen an der interessierenden Meßstelle besteht aus einem Taster 9 mit zwei an den Walzenoberflächen anliegenden mechanischen Meßfühlern 10 und 11. Diese sind mit einem elektrischen Wandler verbunden, so daß im Differenzmeßverfahren ein dem Walzenabstand entsprechendes elektrisches Signal erzeugt wird. Derartige Taster stehen im Fachhandel zur Verfügung, so daß sie nicht weiter beschrieben zu werden brauchen.

Der Ausgang des Tasters 9 ist mit dem Ist-Wert-Eingang (I) eines PID-Reglers 12 verbunden, der aus dem Abstandssignal und einem Sollwert (S) des Abstandes ein Korrektursignal bildet. Die Signale des Regelsystems besitzen eine Auflösung von 12 Bit, so daß eine äußerst hohe Regelgenauigkeit gegeben ist.

Das Korrektursignal ist auf einen Spannungs/Druck-Wandler 13 geschaltet, dessen beide Ausgangssignale die Ventile 7 und 8 ansteuern. Entsprechend dem Steuersignal wird der Druck in den Kammern 5 des hydrostatischen Lagers über Öldruckleitungen 14 eingestellt. Die Einschwingzeit des Regelsystems beträgt minimal 100 μs, so daß die Regelverzögerung vernachlässigbar kurz gehalten werden kann.

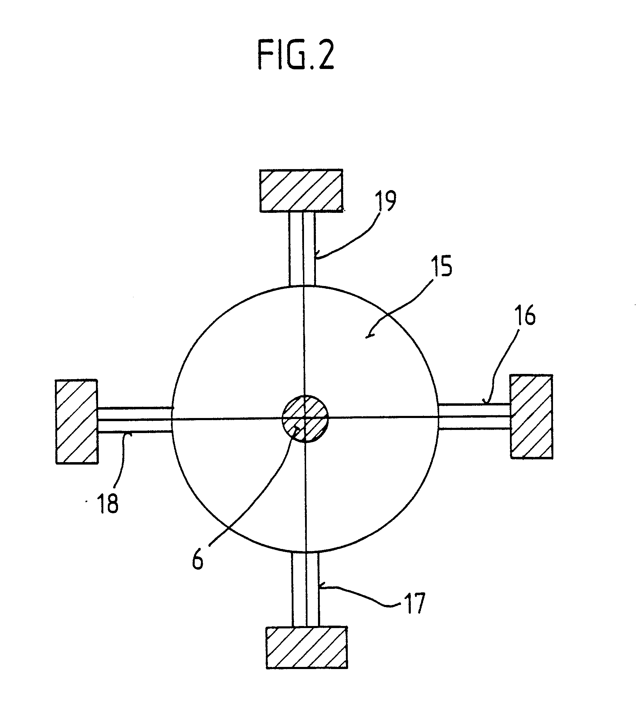

Anstelle des hydrostatischen Lagers kann, wie in Figur 2 gezeigt, auch ein senkrecht zur Lagerachse verschiebbarer Lagerring 15 verwendet werden, in welchem sich das Wellenkugellager befindet. Der Lagerring ist einerseits auf zwei zueinander senkrecht angeordneten, federbelasteten Lagerböcken 16 und 17 abgestützt und steht andererseits mit zwei entsprechend gegenüberliegend angeordneten, piezoelektrischen oder magnetostriktiven Stellgliedern 18 und 19 in Verbindung. Die Ansteuerung der Stellglieder erfolgt sinngemäß wie oben beschrieben über Digital-Analog-Wandler.

Eine weitere Anwendung der vorstehend beschriebenen Anordnung kann darin bestehen, daß in umgekehrter Weise z.B. die Ventile 7 und 8 über den Spannungs-Druck-Wandler 13 mit einem Stellsignal angesteuert werden, das in seinem zeitlichen Verlauf einem gewünschten Bewegungsprofil der Walzenoberfläche entspricht, um beispielsweise beim spanenden Bearbeiten oder Schleifen eines anstelle der Walze rotierenden Werkstücks ein gewünschtes Mikroprofil zu erzeugen. Mit Hilfe des Tasters 9 kann das Profil des Werkstücks überwacht und über den Regler 12 die Ventilsteuerung korrigiert werden.

Die erfindungsgemäße Anordnung zur Kompensation von Rundlaufschwankungen kann vielseitig eingesetzt werden, z.B. bei Präzisionsdrehbänken, Beschichtungsmaschinen, Offset-Druckanlagen, Kalandern, Walzwerken, Oberflächenbearbeitungsmaschinen, Bohrwerken, Maschinenwellen, Radlagern usw.

## Ansprüche

1. Anordnung zur dynamischen Kompensation von Rundlaufschwankungen bei Rotationskörpern, gekennzeichnet durch eine den Umlauf des Rotationskörpers (1) abtastende Meßeinrichtung (9), einen mit dem Ist-Wert-Eingang daran angeschlossenen Regler (12) und ein von diesem angesteuertes Stellglied (7,8), das auf ein verstellbares Lager (4) des Rotationskörpers einwirkt.

2. Anordnung nach Anspruch 1, dadurch gekennzeichnet, daß das verstellbare Lager durch einen Endabschnitt des Rotationskörpers (1) in vier Quadranten umgebende und mit einem Druckmedium gefüllte Kammern (5) gebildet ist, wobei der Druck der einzelnen Kammern durch das Stellglied (7,8) einstellbar ist.

3. Anordnung nach Anspruch 1, dadurch gekennzeichnet, daß das verstellbare Lager durch einen Endabschnitt des Rotationskörpers (1) umgebenden, senkrecht zur Lagerachse verschiebbaren Lagerring (15) gebildet ist, der mit mindestens zwei in zwei zueinander senkrechten Ebenen angeordneten piezoelektrischen oder magnetostriktiven, vom Regler (12) ansteuerbaren Stellgliedern (18,19) verbunden ist.

4. Anordnung nach Anspruch 1 bis 3, dadurch gekennzeichnet, daß die den Umlauf des Rotationskörpers (1) abtastende Meßeinrichtung ein mechanisch-optischer Taster (9) ist.

FIG.1

# FIG.2

462/88